# EUROPEAN PATENT SPECIFICATION

(11) **EP 3 479 659 B1**
(45) Date of publication and mention of the grant of the patent: **30.10.2019**
(21) Application number: 17735434.7
(22) Date of filing: 27.06.2017
(51) Int. Cl.: H05B 37/02

(54) **SYSTEM AND METHOD FOR PROVIDING A DEVICE ACCESS TO SENSOR DATA**
SYSTEM UND VERFAHREN ZUM INFORMIEREN EINER VORRICHTUNG, OB SIE SICH IN EINEM ERFASSUNGSVOLUMEN EINES SENSORS BEFINDET
SYSTÈME ET PROCÉDÉ PERMETTANT D'INFORMER UN DISPOSITIF SI ELLE EST SITUÉE DANS UN VOLUME DE DÉTECTION D'UN CAPTEUR

(30) Priority: 04.07.2016 EP 16177706
(43) Date of publication of application: 08.05.2019
(73) Proprietor: Signify Holding B.V., 5656 AE Eindhoven (NL)
(72) Inventor: ALIAKSEYEU, Dzmitry, Viktorovich, 5656 AE Eindhoven (NL); VAN DE SLUIS, Bartel, Marinus, 5656 AE Eindhoven (NL); ENGELEN, Dirk, Valentinus, René, 5656 AE Eindhoven (NL); MASON, Jonathan, David, 5656 AE Eindhoven (NL)
(74) Representative: Verweij, Petronella Daniëlle
(86) International application number: PCT/EP2017/065757
(87) International publication number: WO 2018/007193

(56) References cited:
- WO-A1-2015/083098
- US-A1- 2015 230 319
- US-A1- 2015 262 103

## Description

### FIELD OF THE INVENTION

The invention relates to a system and a method for providing a device access to sensor data.

### BACKGROUND

Smart Home systems are becoming more popular and widespread and, as a result, many consumers install different sensors in their homes. Some of these sensors, such presence sensors, cameras, directional microphones, light sensors, etc. have a fixed range or an area that they cover. When such sensors are installed, guidelines on how to install such sensors are provided to ensure that they cover the desired area. Typically, a user would use trial and error to see if the sensor is properly installed. During installation of camera based sensors, a user may connect to such a camera and see what camera sees and then adjust its position if needed. This trial and error process can be cumbersome and take a decent amount of time.

WO2015/083098 A1 relates to a lighting system that detects the location of baggage trolleys in a lighted area.

### SUMMARY OF THE INVENTION

It is an object of the present invention to provide system that improves the installation process of sensors with a fixed range or coverage area. It is a further object of the present invention to provide secure way to provide a device access to sensor data.

According to a first aspect of the present invention, the object is achieved by a system comprising:
- the sensor covering the sensing volume, the sensing volume having a particular shape, and
- one or more light sources for emitting light having a light distribution resembling the shape of the sensing volume, the one or more light sources being arranged with respect to the sensor such that the sensing volume substantially overlaps the light distribution, and
- a driver for driving the one or more light sources to embed a code in the light.

The sensing volume (i.e. the range or the coverage area) of the sensor and the light distribution of the one or more light sources have a similar shape and a substantial overlap. The light emitted by the one or more light sources comprises an embedded code. This enables the device (for example a portable smart device comprising a light sensor) to detect the embedded code, and to determine that it is located in the sensing volume of the sensor, only when the code has been detected. The device may provide an indicator via a user interface that the device is located in the sensing volume of the sensor. A user, who has installed the sensor, may move the device through the space wherein the sensor has been installed, whereupon the device may provide the indicator as soon as the embedded code has been received. This provides the advantage that it enables a user to determine which area is covered by the sensor, which may further improve the installation process of the sensor.

An additional feature of this invention is that it enables a user operating the device to determine by which sensors he or she is being monitored/sensed. This may be advantageous in a public environment wherein a number of sensors monitor the people present in that environment. The device may provide information about all sensors and their respective one or more light sources that are in line of sight of the device, for example via a user interface. This provides the benefit that the user can see whether he or she is being monitored or not.

In an embodiment of the system, the code comprises sensor data of the sensor. This embodiment enables a device comprising a light detector to receive sensor data only when the device is located in the sensing volume of the sensor. This is beneficial, because it enables a user operating the device to obtain sensor data easily by pointing the light sensor of the device towards a sensor, without the need to find the exact device in a database. This embodiment is further beneficial in situations wherein the sensor data is only relevant for devices located in the sensing volume of the sensors, for example during the installation of a security camera, wherein the user only has access to the camera image when he or she is located in the sensing volume of the sensor.

In an embodiment of the system, the code comprises a key for providing access to sensor data of the sensor. The key is embedded in the code, which enables a device detecting the code to identify the key. The key may, for example, provide access to a communication channel of the sensor. Alternatively, the key may provide access to a communication channel of a (central) server which is connected to the sensor and arranged for storing sensor data, thereby enabling the device to access the sensor data. Additionally, the key may provide access to historical sensor data, which data may be used by an application running on the device. This embodiment enables a device comprising a light detector to receive sensor data only when the device is located in the sensing volume of the sensor. This is beneficial, because it enables a user operating the device to obtain sensor data easily by pointing the device towards a sensor, without the need to find the exact device in a database.

In an embodiment of the system, the system comprises a transceiver for receiving data from the device indicating that the device is located within the sensing volume, and for providing sensor data to the device if the device is located in the sensing volume of the sensor. This embodiment is beneficial because it enables the sensor to determine that the device is located in its sensing volume and to communicate its sensor data via a communication protocol (e.g. Bluetooth, ZigBee, Li-Fi, Coded Light, Wi-Fi) to the device, only if the device is located in the sensing volume of the sensor.

In an embodiment of the system, the one or more light sources are arranged with respect to the sensor such that at least 90% of the light distribution is located within the boundaries of the sensing volume. A high region of overlap is beneficial because it reduces the number of false positives (which occur when the device is located inside the light distribution but outside the sensing volume). In embodiments, it may be preferred that the percentage of overlap between the sensing volume and the light distribution at a specific distance from the one or more light sources is close to 100%. Such a specific distance may, for example, be a distance wherein the device is typically located, which may, for example, be on waist or torso level of an average user. In embodiments, it may be preferred that the percentage of overlap of the sensing volume and the light distribution at ground level is close to 100%. In embodiments, the sensing volume completely overlaps the light distribution at a specific distance from the one or more light sources. In such embodiments, the size of the shape of the light distribution may be smaller than the size of the shape of the sensing volume. This will further reduce the number of false positives.

In an embodiment of the system, the one or more light sources are arranged with respect to the sensor such that the light distribution is located within the boundaries of the sensing volume. If the light distribution is located within the boundaries of the sensing volume, the possibility of a false positive (i.e. when the device is located inside the light distribution but outside the sensing volume) will be close to zero.

In an embodiment of the system, the system further comprises the device, the device comprising:
a light detector arranged for detecting the code embedded in the light,
a processor arranged for determining that the device is located in the sensing volume of the sensor if the code has been detected.

In embodiments of the system, the device comprises a communication unit arranged for communicating with the sensor, and the processor is arranged for establishing a connection with the sensor if it has been determined that the device is located in the sensing volume of the sensor. This embodiment enables the device to communicate with the sensor only when the device is located in the sensing volume of the sensor. Such communication may enable the device to receive sensor data, to configure/commission the sensor, to control the sensor (e.g. turn it on/off), only when the device is located in the sensing volume of the sensor.

In embodiments of the system, the code comprises an identifier of the sensor, and the processor of the device is arranged for identifying the sensor based on the identifier. Identifying one or more sensors based on one or more respective codes enables the device to differentiate between sensors, whereupon the device may provide information about the identified devices (e.g. sensor data, location data, etc.) to the user operating the device.

In embodiments of the system, the device further comprises a user interface, and the processor is further arranged for providing, via the user interface, an indicator that the device is located in the sensing volume. This is beneficial because it enables the device to communicate to the user that the device is in the sensing volume of the sensor. In further embodiments, the indicator is representative of the sensor data. This is beneficial because it enables the device to communicate the sensor data to the user.

In embodiments of the system, the sensor is a vision sensor, and the sensing volume is defined by a field of view of the vision sensor. The vision sensor, such as a camera or an infrared camera, has a predefined field of view. A benefit of using a vision sensor with one or more light sources being arranged with respect to the vision sensor such that sensing volume substantially overlaps the light distribution, is that the light emitted by the one or more light sources may be used to increase the image quality of the images taken by the vision sensor.

According to a second aspect of the present invention, the object is achieved by a device for use in the system of any one of the above-mentioned embodiments, the device comprising:
- a light detector arranged for detecting a code embedded in the light emitted by the one or more light sources,
- a user interface, and
- a processor arranged for determining that the device is located in the sensing volume of the sensor if the code has been detected, and for providing, via the user interface, an indicator that the device is located in the sensing volume.

It should be understood that the claimed device may have similar and/or identical embodiments and advantages as the claimed system.

According to a third aspect of the present invention, the object is achieved by a method comprising:
- providing the sensor covering the sensing volume, the sensing volume having a particular shape,
- emitting, by one or more light sources, light having a light distribution resembling the shape of the sensing volume, such that the sensing volume substantially overlaps light distribution, and
- driving the one or more light sources to embed a code in the light.
In embodiments on the method, the method further comprises:
- detecting, by the device, the code embedded in the light,
- determining that the device is located in the sensing volume of the sensor if the code has been detected, and
- providing, via a user interface, an indicator that the device is located in the sensing volume.

In the context of the present invention, the phrase "resembling the shape" is used to indicate that shape of the light distribution is similar to the shape of the sensing volume. The light distribution and the sensing volume may be of similar shape, but the size of the light distribution may for example be smaller than the size of the sensing volume, such that the light distribution is located within the boundaries of the sensing volume.

In the context of the present invention, the phrase "substantially overlaps" is used to indicate that the light distribution is located at the same location as the sensing volume. Due to technical limitations, the sensing volume may not overlap the light distribution in its entirety, but preferably at least 80%, and more preferably at least 90%, and even more preferably at least 95% of the volume of the light distribution is located within the boundaries of the sensing volume. The sensing volume may also fully overlap the light distribution (this is the case when the one or more light sources are arranged with respect to the sensor such that the light distribution is located within the boundaries of the sensing volume).

### BRIEF DESCRIPTION OF THE DRAWINGS

The above, as well as additional objects, features and advantages of the disclosed systems, devices and methods, will be better understood through the following illustrative and non-limiting detailed description of embodiments of devices and methods, with reference to the appended drawings, in which:
Fig. 1 shows schematically a side view of a system according to the invention for informing a device whether it is located in a sensing volume of a sensor;
Fig. 2a shows schematically a bottom view of a sensing device comprising a sensor and a plurality of light sources;
Fig. 2b shows schematically a perspective view of the sensing device of Fig. 2a comprising a sensor and a plurality of light sources;
Fig. 3 shows schematically a side view of a system according to the invention for informing a device whether it is located in a sensing volume of a sensor;
Fig. 4 shows schematically a side view of a system according to the invention for informing a device whether it is located in a sensing volume of a plurality of sensors;
Fig. 5a shows schematically a side view of a system according to the invention for informing a device whether it is located in a sensing volume of a sensor, wherein the device comprises a vision sensor directed to the surface illuminated by a light source;
Fig. 5b shows schematically an embodiment of a user interface for providing a virtual representation of the sensing volume; and
Fig. 6 shows schematically steps of a method according to the invention of informing a device whether it is located in a sensing volume of a sensor.

All the figures are schematic, not necessarily to scale, and generally only show parts which are necessary in order to elucidate the invention, wherein other parts may be omitted or merely suggested.

### DETAILED DESCRIPTION OF EMBODIMENTS

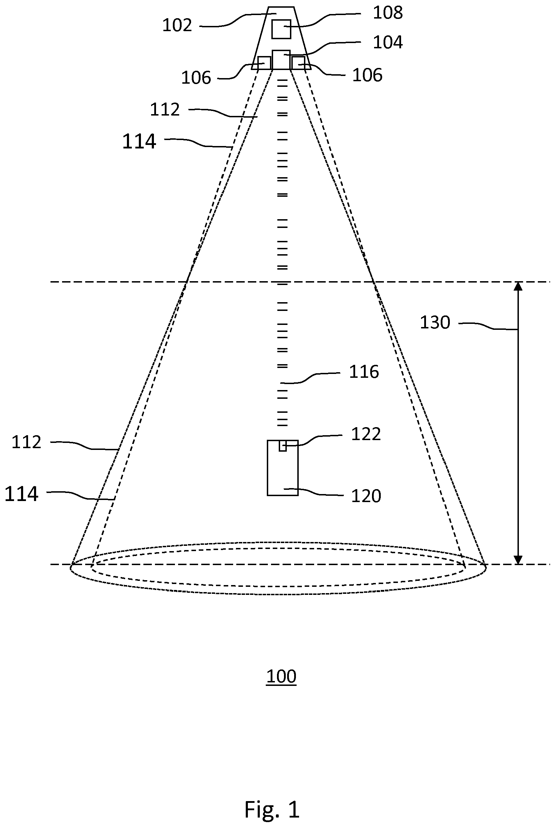

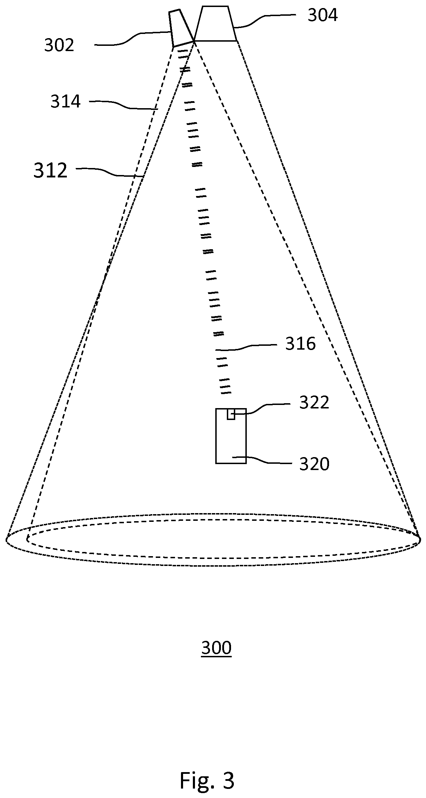

Fig. 1 shows schematically a side view of a system 100 according to the invention for informing a device 120 whether it is located in a sensing volume 112 of a sensor 104. The system 100 comprises the sensor 104 covering the sensing volume 112, the sensing volume 112 having a particular shape, for example a conical shape as illustrated in Fig. 1. The system 100 further comprises one or more light sources 106 for emitting light having a light distribution 114 resembling the shape of the sensing volume 112, for example a conical shape as illustrated in Fig. 1. The one or more light sources 106 are arranged with respect to the sensor 104 such that the sensing volume 112 substantially overlaps the light distribution 114. The system 100 further comprises a driver 108 for driving the one or more light sources 106 to embed a code 116 in the light. In embodiments, the sensor 104, the one or more light sources 106 and the driver 108 may be comprised in one housing of a sensing device 102. Alternatively, the one or more light sources 106 and the driver 108 may be comprised in a lighting device, while the sensor may be a separate device (see for example Fig. 3, which is discussed below).

The system 100 may further comprise the device 120 which comprises a light detector 122 arranged for detecting the code 116 embedded in the light emitted by the one or more light sources 106. The device may comprise a processor (not shown) for determining that the device 120 is located in the sensing volume 112 of the sensor 104 if the code 116 has been detected.

The sensor 104 may be any type of sensor 104 with a sensing volume 112. The sensing volume 112 is determined by an area that is covered by the sensor 104, i.e. the area wherein the sensor 104 is able to detect or sense sensory stimuli. The type of sensory stimuli are dependent on the type of sensor 104. The sensor 104 may, for example, be a vision sensor such as a camera for sensing visual stimuli, wherein the sensing volume 112 may be the field of view of the vision sensor. The sensor may, for example, be a Passive Infrared (PIR) sensor for sensing infrared stimuli, wherein the sensing volume 112 may be the field of view of the PIR sensor. The sensor may, for example, be a directional audio sensor (for example a cardioid microphone) for sensing auditory stimuli, wherein the sensing volume 112 may be determined by the directional cone wherein the audio sensor may sense the auditory stimuli. The sensor may, for example, be an ultrasound sensor for sensing (reflected) ultrasound stimuli, wherein the sensing volume 112 may be the field wherein reflected ultrasound signals can be detected by the ultrasound sensor. It should be noted that the above-mentioned examples of sensors illustrate rather than limit the invention, and that those skilled in the art will be able to implement different sensors with a sensing volume without departing from the scope of the appended claims.

The sensor 104 may be a sensor having a (predetermined) field of view. Examples of sensors include but are not limited to cameras, image sensors, PIR sensors, etc. A benefit of using a sensor 104 with a field of with one or more light sources 106 being arranged with respect to the sensor 104 such that sensing volume 112 substantially overlaps the light distribution 114, is that the light emitted by the one or more light sources 106 may be used to illuminate the sensing volume 112 so as to provide light to detect objects and/or people in a more accurate way. As such, the system 100 may have two main functions: to determine which area is covered by the sensor and to improve the accuracy of presence detection.

Fig. 1 schematically shows a system 100 according to the invention, wherein the light distribution 114 resembles the shape of the sensing volume 112, and wherein the one or more light sources 106 are arranged with respect to the sensor 104 such that the sensing volume 112 substantially overlaps the light distribution 114. As illustrated in Fig. 1, the sensing volume 112 does not completely overlap the light distribution 114 (the top right and top left parts of the light distribution 114 are not overlapped by the sensing volume 114), but a 100% overlap is not necessarily required to achieve the desired effect of the invention. The chances that a user holding the device 120 will position the device 120 in one of those areas is close to zero. In embodiments, it may be preferred that the shape of the light distribution 112 is located substantially within the boundaries of the shape of the sensing volume (the size of the shape of the light distribution 114 may be equal to or smaller than the size of the shape of the sensing volume 112), because this removes the chance for false positives (which occur when the device 120 is located inside the light distribution 114 but outside the sensing volume 112). In embodiments, it may be preferred that the one or more light sources 106 are positioned as close as possible to the sensor 104 in order to decrease the size of the areas wherein the sensing volume 112 does not overlap the light distribution 114. In embodiments, it may be preferred that the sensing volume 112 overlaps the light distribution 114 at least in an area in between threshold distances from the sensor 104. An example of such an area is indicated by reference numeral 130 if Fig. 1. This area 130 is the area wherein a user is likely to position the device 120 with respect to the sensor 104 (e.g. from ground level to a level wherein a user may position the device, for example on average waist level, average torso level, average eye level or a level as high as an upwardly stretched out arm). This will further reduce the number of or remove the chance of false positives.

The sensing volume 112 may have a predefined fixed shape, or the sensing volume 112 may have a controllable shape. The sensing volume 112 may, for example, have a circular, oval, square or any other shape. The light distribution 114 of the one or more light sources 106 has a shape resembling the shape of the sensing volume 112. The one or more light sources 106 may comprise optics so as to create the resembling shape. In embodiments wherein the shape of the sensing volume 112 is controllable, the shape of the light distribution 114 of the one or more light sources 106 may also be controllable such that the light distribution 114 resembles the shape of the sensing volume 112 and such that the sensing volume 112 substantially overlaps the light distribution 114. An example of a sensor 104 with a controllable sensing volume 112 is a vision sensor, such as a camera, which may have a zooming function so as to increase or decrease the coverage area of the sensor 104. The one or more light sources 106 may comprise a beam shape controller comprising controllable optics for controlling the shape of the light distribution 114. The controllable optics (such as moveable lenses, mirrors, reflectors, shades or other light distribution elements) determine the shape. Alternatively, the system 100 comprises a plurality of light sources arranged for emitting the light, and the light distribution may be controlled by selectively controlling the light emission of the plurality of light sources. This embodiment allows for non-mechanical (digital) control of the beam source.

In embodiments, wherein the shape of the sensing volume 112 is controllable, the shape of the sensing volume 112 (and therewith the shape of the light distribution 114 of the one or more light sources 106) may be controlled by the device 120. The device 120 may be arranged for communicating (wirelessly) with the sensor 104 and the one or more light sources 106 in order to control the shapes of the light distribution 114 and the sensing volume 112. This enables a user operating the device 120 to for example increase/decrease the size of the sensing volume 112 in order to create a desired sensing volume 112. Additionally or alternatively, the location of the sensing volume 112 (and therewith the location of the light distribution 114 of the one or more light sources 106) may be controllable. The user and the device 120 may, for example, be located outside the sensing volume 112. The user may connect to the sensor 104 with the controllable sensing volume 112, and increase the size and/or change the location of the sensing volume 112. At a certain moment in time, the light detector 122 of the device 120 may detect the code embedded in the light emitted by the one or more light sources 106, whereupon the processor of the device 120 may provide an indicator via a user interface of the device 120 that the device 120 is located within the sensing volume 112 of the sensor 104. The indicator provides information to the user operating the device 120 that the device 120 is located in the sensing volume 112. This is advantageous, because it enables a user to configure the location and/or the size of the sensing volume 112 of the sensor 104.

The driver 108 is arranged for driving the one or more light sources 106, such as LED light sources, to embed a code 116 in the light. The embedded code 116 may be created by controlling a time-varying, modulated current to the one or more light sources to produce variations in the light output that are detectable by a light detector 122 comprised in the device 120. The code 116 may be a predetermined code which can be detected by the light detector 122 of the device 120. The predetermined code may be emitted by the lighting device repeatedly, or the code may be emitted every predefined time interval. The processor of the device 120 may recognize this predetermined code and thereby determine that the device 120 is located in the sensing volume 112 of the sensor 104. Embedding a predetermined code in the light emitted by the one or more light sources 106 may be beneficial, because it removes the need for a dedicated communication channel between the device 120 and the driver 108 of the one or more light sources 106. Alternatively, the device 120 and the driver 108 of the one or more light sources 106 may be arranged for communicating via a dedicated communication protocol. Examples of such communication protocols include but are not limited to Bluetooth, Wi-Fi, Li-Fi, 3G, 4G and ZigBee. The device 120 may comprise a transmitter arranged for transmitting a request signal to a receiver coupled a controller (e.g. a microcontroller, circuitry, a microchip, etc.) coupled to the driver 108 of the one or more light sources 106. The request signal may comprise a request message, which, when received by the controller, instructs the driver 108 to emit the code 116. The device 120 may, for example, transmit such a request signal to all sensors 104 (and therewith to their respective one or more light sources 106) in vicinity of the device 120. The request signal may further comprise authorization data and/or an identifier of the device 120, enabling the controller to authorize/identify the device 120 to request the emission of the code 116. The code may further be encrypted, which may only be decrypted by the device 120 that transmitted the request signal. Establishing such a connection via a dedicated communication protocol before emission of the code 116 may be beneficial, because it enables a more secure communication between the device 120 and the one or more light sources 106, because other (unauthorized) devices are not able to request the emission of the embedded code 116.

The one or more light sources 106 may be any type of light sources, for example LED light sources, OLED light sources, etc., arranged to be controlled such that their light output comprises an embedded code 116. The one or more light sources 106 may be arranged for emitting invisible light, such as infrared light, or be arranged for emitting visible light. The one or more light sources 106 may be arranged for emitting both visible and invisible light, and the embedded code may, for example, be comprised in the invisible light. Use of one or more light sources 106 arranged for emitting visible light may be advantageous, because it may allow the user to see the area of the sensing volume 112, for example by looking at the footprint of the light on a surface. Preferably, the one or more light sources 106 have a hard-edged beam of light, because this enables a proper distinction between being located inside and outside the light distribution 114 (and therewith the sensing volume 112).

In embodiments wherein the one or more light sources 106 are arranged for emitting visible light, the one or more light sources 106 may be controlled such that they emit light indicative of current sensor readings. If, for example, the sensor 104 is a presence detector, the one or more light sources 106 may be controlled such that their light output has a first color, saturation and/or intensity when no presence is detected by the sensor, and the light output may have a second color, saturation and/or intensity when presence has been detected.

The driver 108 may be further arranged for controlling/changing the visible light output of the one or more light sources 106 when a device 120 is present in the sensing volume 112 of the sensor 104. The driver 108 may, for example, control the visual light output of the one or more light sources 106 to blink, or to change to a specific color when the device 120 is present in the sensing volume 112. This is advantageous because it provides a visual indicator for a user, indicating that the device 120 is present in the sensing volume 112 of the sensor 104.

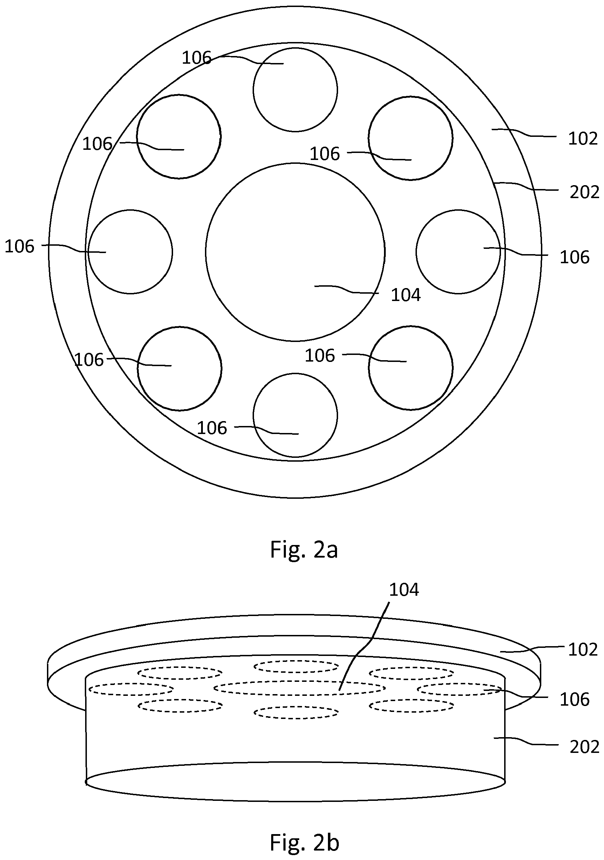

Figs. 2a and 2b illustrate an example of a sensing device 102 for use in the system 100 comprising a plurality of light sources 106 and a sensor 104 for detecting a sensory stimulus. The plurality of light sources 106 are arranged around the sensor 104. The plurality of light sources 106 comprise optics which are selected such that the combined light distribution of the plurality of light sources 106 resemble the shape of the sensing volume of the sensor 104. The sensing device 102 may comprise a light blocking element 202, which is further illustrated in Fig. 2b, such that the plurality of light sources 106 create a predetermined-edged light beam.

Fig. 3 shows an alternative configuration of a system 300 according to the invention, wherein the (one or more) light source(s) 302 and the sensor 304 are separate elements. In this configuration, the light source 302 is arranged with respect to the sensor 304 such that the sensing volume 312 substantially overlaps the light distribution 314, such that the device 320 receives the code 316 via the light detector 322 when it is located in the light distribution 314 of the light source 302. Additionally, the system 300 may comprise a plurality of light sources 302. The plurality of light sources 302 may be arranged with respect to the sensor 304 such that each light distribution 314 is located substantially within the boundaries of the sensing volume 312 of the sensor 304. Alternatively, the plurality of light sources 302 may be arranged such that each of light distributions 314 of the light sources 302 at least partially overlaps with the sensing volume 312, and that multiple light distributions 314 have a region of overlap, which region of overlap is located substantially within the boundaries of the sensing volume 312 of the sensor 304. The plurality of light sources 302 may be arranged for emitting light comprising unique codes, and only when the device 320 receives the plurality of unique codes via the light detector 322, the processor of the device 320 may determine that it is located in the sensing volume 312 of the sensor 302.

The sensor 104 and the driver 108 of the one or more light sources 106 may be coupled to a controller (not shown) (e.g. a microcontroller, circuitry, a microchip, etc.). The controller may be arranged for receiving sensor data from the sensor 104, and for controlling the driver 108 such that the driver drives the one or more light sources 106 such that the code 116 embedded in the light comprises sensor data of the sensor 104. The processor of the device 120 may be arranged for decoding the code 116 detected by the light detector 122, so as to retrieve the sensor data. Additionally or alternatively, the controller may be arranged for controlling the driver 108 such that the driver drives the one or more light sources 106 such that the code 116 embedded in the light comprises a key for providing access to (historical) sensor data of the sensor 104. The processor of the device 120 may be arranged for decoding the code 116 detected by the light detector 122, so as to retrieve the key. Upon retrieving the key, the device 120 may transmit a request signal to, for example, the controller of the sensor 104. Alternatively, the device 120 may transmit a request signal to a further device, for example a central server, which is connected to the sensor 104 and arranged for receiving (and, optionally, storing) the sensor data. The system 100 may further comprise a transceiver (which may be comprised in the sensor 104 or in the further device) for receiving data from the device 120 indicating that the device 120 is located within the sensing volume 112, and for providing sensor data to the device 120 if the device 120 is located in the sensing volume 112 of the sensor 104. Upon establishing a connection with the sensor 104 or with the further device, the device 120 may request the sensor data. The sensor data may be real-time sensor readings, may be historical sensor readings, may be aggregated sensor readings, etc. Examples of sensor data include but are not limited to: presence/occupancy information, movement information, audio information, a video stream, an audio stream, etc. Such a system 100 may, for example, be installed in a public environment wherein one or more sensors 104 are present. The one or more sensors 104 may have sensing volumes 112, and be arranged such that they cover specific areas of the environment. An authorized person (e.g. a police officer) may request the (historical) sensor data from a specific sensor (such as a camera) by positioning the device 120 such that it may detect the code 116 embedded in the light emitted by one or more light sources 106 associated with the specific sensor. This may, for example, be used when an accident has occurred in the environment, because it enables the authorized person to request the sensor data by simply pointing the light detector 122 of the device 120 towards the sensors 104 present in the environment which might have captured the accident. The (historical) sensor data may be stored for later review and/or be communicated directly to the device 120 operated by the authorized person.

The controller, coupled to the sensor 104 and the driver 108 of the one or more light sources 106, may be further arranged for controlling the driver 108 such that the driver drives the one or more light sources 106 such that the code 116 embedded in the light comprises an identifier of the sensor 104. The processor of the device 120 may be arranged for identifying the sensor 104 based on the identifier. This is beneficial for a system 100 comprising a plurality of sensors 104, because it enables the device 120 to identify each of the plurality of sensors. The device 120 may further comprise a user interface arranged for providing information to a user about in which sensing volume 112 of which sensor 104 the device 120 is located. By embedding a sensor identifier in the code 116, the device 120 can identify each of the plurality of devices and provide information to a user about in which sensing volume 112 of which sensor 104 the device 120 is located.

The device 120 may further comprise a user interface, and the processor of the device 120 may be further arranged for providing, via the user interface, an indicator that the device is located in the sensing volume 112 of the sensor 104. The device 120 may, for example, comprise a display arranged for displaying virtual representations (e.g. icons) of one or more sensors. The device 120 may comprise communication logic for communicating with the sensors 104, such that the device 120 can obtain information about their presence in, for example, the network. Upon entering the sensing volume 112 of a sensor 104, the light detector 122 of the device 120 may detect the code 116 embedded in the light emitted by one or more light sources 106 associated with the sensor 104, whereupon the processor of the device 120 may change the virtual representation of the sensor to indicate to a user that he or she is located within the sensing volume 112 of that sensor 104. Alternatively, the processor may provide a virtual representation of the sensor 104 only when the device 120 is located in the sensing volume 112.

Additionally or alternatively, the device 120 may, for example, comprise an indicator LED arranged for indicating if the device 120 is located in the sensing volume 114 of the sensor 104. The indicator LED may, for example, change color or intensity when the device 120 detects the code 116.

Additionally or alternatively, the device 120 may, for example, comprise a vibration element arranged for indicating if the device 120 is located in the sensing volume 114 of the sensor 104. The vibration element may, for example, vibrate when the device 120 detects the code 116.

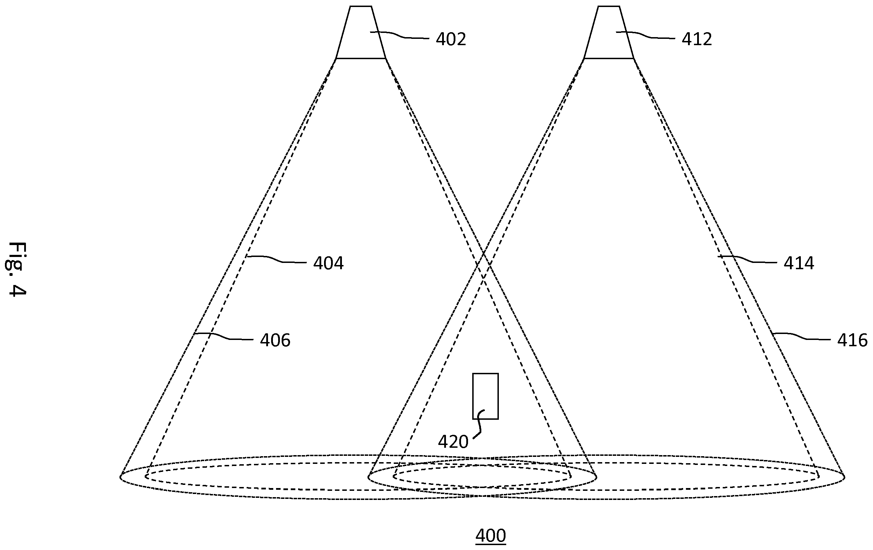

Fig. 4 shows schematically a side view of a system 400 according to the invention for informing a device 420 whether it is located in sensing volume 406 and/or 416 of sensor 404 and/or 414. The system 400 comprises two sensing devices 402 and 412, which each comprise a sensor (not shown) covering a sensing volume 406 and 416 respectively, and one or more light sources (not shown) for emitting light having light distributions 404 and 414 respectively, which light distributions 404, 414 resemble the shapes of the sensing volumes 406 and 416. The one or more light sources of both sensing devices 402, 404 comprise drivers arranged for driving the one or more light sources to embed a code in the light. The codes (not shown) emitted by both sensing devices 402, 404 are different such that the device 420 is able to identify the sensing devices 402, 404. The codes may be emitted sequentially or simultaneously. The device 420 may comprise a camera for detecting both sensing devices 402, 404 and capture the codes (not shown) emitted by the sensing devices 402, 404. Alternatively, the device 420 may comprise a light sensor, such as a photodetector, to detect the light and therewith the codes emitted by the sensing devices 402, 404, which may require that the codes are emitted sequentially and not simultaneously in order to improve the detectability of both codes. The system 400 of Fig. 4 may be used during installation/commissioning of the sensors. For example: a user may move the device 420 from the center of first sensing volume 406 of first sensing device 402 (e.g. directly underneath the first sensing device 402) towards the periphery of the sensing volume 406, and if, during the movement, both the first sensing device 402 and second sensing device 404 are detected, the user is informed that the sensing devices 402, 404 have overlapping sensing volumes 406, 416 and therefore cover the area in between the sensing devices 402, 404 sufficiently. If the sensing devices 402, 404 have no overlapping sensing volumes 406, 416, the user might want to reposition one of the sensing devices 402, 404 to ensure that the entire area (e.g. a room) is covered by the sensing devices 402, 404.

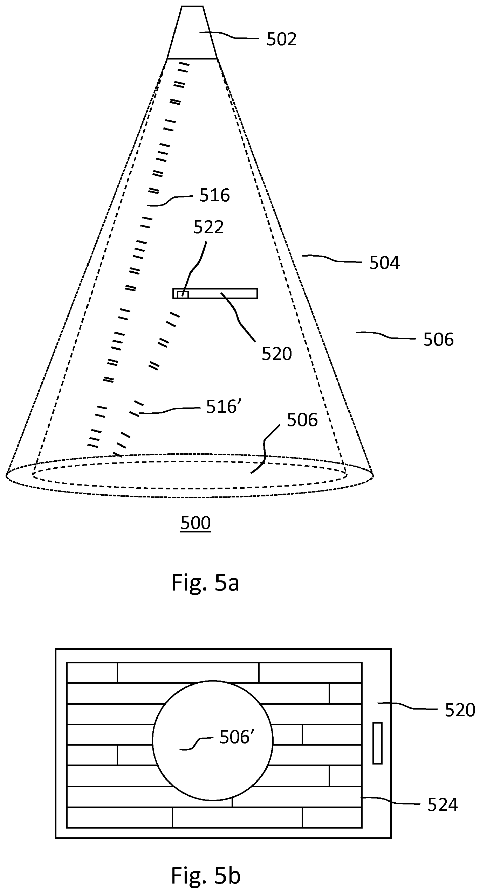

Fig. 5a shows schematically a side view of a system 500 according to the invention for informing a device 520 whether it is located in a sensing volume 506 of a sensing device 502. The sensing device 502 comprises a sensor (not shown) covering a sensing volume 506, and one or more light sources (not shown) for emitting light having a light distribution 504, which light distribution 504 resembles the shapes of the sensing volume 506. The one or more light sources of the sensing device 502 comprise a driver arranged for driving the one or more light sources to embed a code 516 in the light. The device 520 may comprise a camera 522 pointed towards a surface that reflects the light, and therewith the code 516. By capturing a sequence of images, the device 520 is able to detect, based on image information, reflected code 516' and determine, based on the image information, the area 506 on the surface (in this example the floor) which is illuminated by the one or more light sources. Based on this illuminated area 506, the device is able to determine the sensing range of the sensor comprised in the sensing device 502. Fig. 5b shows schematically an embodiment of a user interface on the device 520 (e.g. a smartphone) comprising a display 524 for providing a virtual representation 506' of the illuminated area 506. The virtual presentation may be visualized by providing the virtual representation as an overlay on top of the actual images (i.e. real-time video). In the example of Fig. 5b the display shows a laminated floor (i.e. the actual image) with the virtual representation 506' overlaid on top of the laminated floor. This enables a user to move the device around in order to detect the illuminated area, and therewith the sensing range of the sensor. Such a system 500 is beneficial, because it enables visualization of the areas wherein the sensor may sense the sensory stimuli. This may be further beneficial if the system 500 comprises a plurality of sensors, each with its own sensing range, because it enables a user to see if and where the sensing ranges overlap.

In embodiments, a controller coupled to the one or more light sources 106 and the sensor 104 may have access to information related to the shape, size and/or location of the sensing volume 112. The controller may be arranged for controlling the driver 108 such that it embeds information related to the shape, size and/or location of the sensing volume 112 so as to provide this information to the device 120. The device 120 may further communicate this information to a user via a user interface. Such information may be beneficial during installation or commissioning of the sensors.

In embodiments, each sensor 104 may be associated with a first and a second light source, the first light source being arranged for emitting light comprising the code 116, the light having a light distribution 114 resembling the shape of the sensing volume 112 and being arranged with respect to the sensor 104 such that the sensing volume 112 substantially overlaps the light distribution 114. The second light source may be arranged for emitting light comprising a second embedded code, the second embedded code being indicative of the presence of the sensor 104. The second light source may be arranged for emitting light having a light distribution at least outside the sensing volume 112 of the sensor 104. The light detector 122 of the device 120 may be further arranged for detecting the second embedded code, and the processor of the device 120 may be arranged for providing, via a user interface, a presence indicator indicating the presence of the sensor 104 if the second embedded code has been detected. Additionally, the processor of the device 120 may be arranged for providing, via the user interface, an indicator that the device is located in the coverage area if the embedded code has been detected. This embodiment provides the advantage that a user can detect the presence of a sensor 104, even if the device 120 is located outside the sensing volume 112 of the sensor 104.

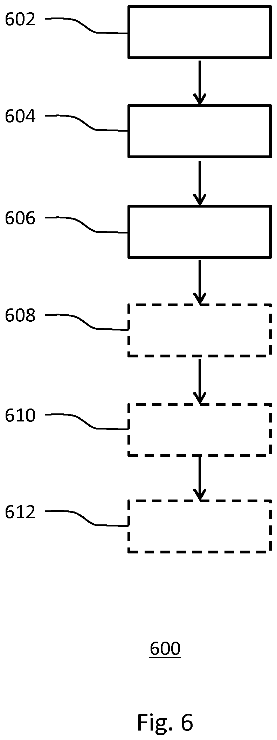

Fig. 6 shows schematically steps of a method 600 according to the invention of informing a device whether it is located in a sensing volume of a sensor. The method comprises the steps of:
- providing 602 the sensor covering the sensing volume having a particular shape,
- emitting 604, by one or more light sources, light having a light distribution resembling the shape of the sensing volume, such that the sensing volume substantially overlaps light distribution, and
- driving 606 the one or more light sources to embed a code in the light.
In embodiments, the method 600 further comprises the steps of:
- detecting 608, by the device, the code embedded in the light,
- determining 610 that the device is located in the sensing volume of the sensor if the code has been detected, and
- providing 612, via a user interface, an indicator that the device is located in the sensing volume.

The steps of detecting 608 the code embedded in the light, determining 610 that the device is located in the sensing volume of the sensor if the code has been detected and providing 612, via the user interface, an indicator that the device is located in the sensing volume, may be performed by a computer program product for a computing device, for example when the computer program product is run on the processor of the device 120.

It should be noted that the above-mentioned embodiments illustrate rather than limit the invention, and that those skilled in the art will be able to design many alternative embodiments without departing from the scope of the appended claims.

In the claims, any reference signs placed between parentheses shall not be construed as limiting the claim. Use of the verb "comprise" and its conjugations does not exclude the presence of elements or steps other than those stated in a claim. The article "a" or "an" preceding an element does not exclude the presence of a plurality of such elements. The invention may be implemented by means of hardware comprising several distinct elements, and by means of a suitably programmed computer or controller. In the device claim enumerating several means, several of these means may be embodied by one and the same item of hardware.

Aspects of the invention may be implemented in a computer program product, which may be a collection of computer program instructions stored on a computer readable storage device which may be executed by a computer. The instructions of the present invention may be in any interpretable or executable code mechanism, including but not limited to scripts, interpretable programs, dynamic link libraries (DLLs) or Java classes. The instructions can be provided as complete executable programs, partial executable programs, as modifications to existing programs (e.g. updates) or extensions for existing programs (e.g. plugins). Moreover, parts of the processing of the present invention may be distributed over multiple computers or processors.

Storage media suitable for storing computer program instructions include all forms of nonvolatile memory, including but not limited to EPROM, EEPROM and flash memory devices, magnetic disks such as the internal and external hard disk drives, removable disks and CD-ROM disks. The computer program product may be distributed on such a storage medium, or may be offered for download through HTTP, FTP, email or through a server connected to a network such as the Internet.

## Claims

1. A system (100) for providing a device (120) access to sensor data of a sensor (104), the system (100) comprising:
- the sensor (104) covering a sensing volume (112), the sensing volume (112) having a particular shape, and
- one or more light sources (106) for emitting light having a light distribution (114) resembling the shape of the sensing volume (112), the one or more light sources (106) being arranged with respect to the sensor (104) such that the sensing volume (112) substantially overlaps the light distribution (114), and
- a driver (108) for driving the one or more light sources (106) to embed a code (116) in the light,
**characterised in that** the code (116) comprises the sensor data of the sensor (104), or **in that** the code (116) comprises a key for providing access to the sensor data of the sensor (104).

2. The system (100) of claim 1, wherein the system (100) comprises a transceiver for receiving data from the device (120) indicating that the device (120) is located within the sensing volume (112), and for providing sensor data to the device (120) if the device (120) is located in the sensing volume (112) of the sensor (104).

3. The system (100) of any one of the preceding claims, wherein the one or more light sources (106) are arranged with respect to the sensor (104) such that at least 90% of the light distribution (114) is located within the boundaries of the sensing volume (112).

4. The system (100) of claim 3, wherein the one or more light sources (106) are arranged with respect to the sensor (104) such that the light distribution (114) is located within the boundaries of the sensing volume (112).

5. The system (100) of any one of the preceding claims, wherein the system (100) further comprises the device (120), the device (120) comprising:
- a light detector (122) arranged for detecting the code (116) embedded in the light,
- a processor arranged for determining that the device (120) is located in the sensing volume (112) of the sensor (104) if the code (116) has been detected.

6. The system (100) of claim 5, wherein the device (120) comprises a communication unit arranged for communicating with the sensor (104), and wherein the processor is arranged for establishing a connection with the sensor (104) if it has been determined that the device (120) is located in the sensing volume (112) of the sensor (104).

7. The system (100) of claim 5 or 6, wherein the code (116) comprises an identifier of the sensor (104), and wherein the processor of the device (120) is arranged for identifying the sensor (104) based on the identifier.

8. The system (100) of any one of the claims 5 to 7, wherein the device (120) further comprises a user interface, and wherein the processor is further arranged for providing, via the user interface, an indicator that the device (120) is located in the sensing volume (112).

9. The system (100) of any one of the preceding claims, wherein the sensor (104) is a vision sensor, and wherein the sensing volume (112) is defined by a field of view of the vision sensor.

10. A method of providing a device (120) access to sensor data of a sensor (104), the method comprising:
- providing the sensor (104) covering a sensing volume (112), the sensing volume (112) having a particular shape,
- emitting, by one or more light sources (106), light having a light distribution (114) resembling the shape of the sensing volume (112), such that the sensing volume (112) substantially overlaps light distribution (114), and
- driving the one or more light sources (106) to embed a code (116) in the light,
**characterised in that** the code (116) comprises the sensor data of the sensor (104), or **in that** the code (116) comprises a key for providing access to the sensor data of the sensor (104).

11. The method of claim 10, further comprising:
- detecting, by the device (120), the code (116) embedded in the light,
- determining that the device (120) is located in the sensing volume (112) of the sensor (104) if the code (116) has been detected, and
- providing, via a user interface, an indicator that the device (120) is located in the sensing volume (112).

## Patentansprüche

1. System (100) zum Bereitstellen einer Vorrichtung (120) eines Zugriffs auf Sensordaten eines Sensors (104), das System (100) umfassend:
- den Sensor (104), der ein Erfassungsvolumen (112) abdeckt, wobei das Erfassungsvolumen (112) eine bestimmte Form aufweist, und
- eine oder mehrere Lichtquellen (106) zum Emittieren von Licht, das eine Lichtverteilung (114) aufweist, die der Form des Erfassungsvolumens (112) ähnlich ist, wobei die eine oder mehr Lichtquellen (106) in Bezug auf den Sensor (104) angeordnet sind, sodass das Erfassungsvolumen (112) im Wesentlichen mit der Lichtverteilung (114) überlappt, und
- einen Treiber (108) zum Betreiben der einen oder mehr Lichtquellen (106), um einen Code (116) in dem Licht einzubetten,
**dadurch gekennzeichnet, dass** der Code (116) die Sensordaten des Sensors (104) umfasst, oder
dadurch, dass der Code (116) einen Schlüssel zum Bereitstellen von Zugriff auf die Sensordaten des Sensors (104) umfasst.

2. System (100) nach Anspruch 1, wobei das System (100) einen Sendeempfänger zum Empfangen von Daten von der Vorrichtung (120) umfasst, die anzeigen, dass die Vorrichtung (120) innerhalb des Erfassungsvolumens (112) liegt, und zum Bereitstellen von Sensordaten an die Vorrichtung (120), falls die Vorrichtung (120) im Erfassungsvolumen (112) des Sensors (104) liegt.

3. System (100) nach einem der vorstehenden Ansprüche, wobei die eine oder mehr Lichtquellen (106) in Bezug auf den Sensor (104) angeordnet sind, sodass mindestens 90 % der Lichtverteilung (114) innerhalb der Grenzen des Erfassungsvolumens (112) liegen.

4. System (100) nach Anspruch 3, wobei die eine oder mehr Lichtquellen (106) in Bezug auf den Sensor (104) angeordnet sind, sodass die Lichtverteilung (114) innerhalb der Grenzen des Erfassungsvolumens (112) liegt.

5. System (100) nach einem der vorstehenden Ansprüche, wobei das System (100) weiter die Vorrichtung (120) umfasst, die Vorrichtung (120) umfassend:
einen Lichtdetektor (122), der zum Erkennen des Codes (116) angeordnet ist, der im Licht eingebettet ist,
- einen Prozessor, der zum Ermitteln angeordnet ist, dass die Vorrichtung (120) im Erfassungsvolumen (112) des Sensors (104) liegt, falls der Code (116) erkannt wurde.

6. System (100) nach Anspruch 5, wobei die Vorrichtung (120) eine Kommunikationseinheit umfasst, die angeordnet ist, mit dem Sensor (104) zu kommunizieren, und wobei der Prozessor angeordnet ist, eine Verbindung mit dem Sensor (104) einzurichten, falls ermittelt wurde, dass die Vorrichtung (120) im Erfassungsvolumen (112) des Sensors (104) liegt.

7. System (100) nach Anspruch 5 oder 6, wobei der Code (116) eine Kennung des Sensors (104) umfasst, und wobei der Prozessor der Vorrichtung (120) zum Identifizieren des Sensors (104) basierend auf der Kennung angeordnet ist.

8. System (100) nach einem der Ansprüche 5 bis 7, wobei die Vorrichtung (120) weiter eine Anwenderschnittstelle umfasst und wobei der Prozessor weiter zum Bereitstellen, über die Anwenderschnittstelle, eines Indikators, dass die Vorrichtung (120) im Erfassungsvolumen (112) liegt, angeordnet ist.

9. System (100) nach einem der vorstehenden Ansprüche, wobei der Sensor (104) ein Sichtsensor ist, und wobei das Erfassungsvolumen (112) durch ein Blickfeld des Sichtsensors definiert ist.

10. Verfahren zum Bereitstellen einer Vorrichtung (120) eine Zugriffs auf Sensordaten eines Sensors (104), das Verfahren umfassend:
- Bereitstellen des Sensors (104), der ein Erfassungsvolumen (112) abdeckt, wobei das Erfassungsvolumen (112) eine bestimmte Form aufweist,
- Emittieren, durch eine oder mehr Lichtquellen (106), von Licht, das eine Lichtverteilung (114) aufweist, die der Form des Erfassungsvolumens (112) ähnlich ist, sodass das Erfassungsvolumen (112) im Wesentlichen mit Lichtverteilung (114) überlappt, und
- Antreiben der einen oder mehr Lichtquellen (106), um einen Code (116) in dem Licht einzubetten,
**dadurch gekennzeichnet, dass** der Code (116) die Sensordaten des Sensors (104) umfasst, oder
dadurch, dass der Code (116) einen Schlüssel zum Bereitstellen von Zugriff auf die Sensordaten des Sensors (104) umfasst.

11. Verfahren nach Anspruch 10, weiter umfassend:
- Erkennen, durch die Vorrichtung (120), des Codes (116), der im Licht eingebettet ist,
- Ermitteln, dass die Vorrichtung (120) im Erfassungsvolumen (112) des Sensors (104) liegt, falls der Code (116) erkannt wurde, und
- Bereitstellen, über eine Anwenderschnittstelle, eines Indikators, dass die Vorrichtung (120) im Erfassungsvolumen (112) liegt.

## Revendications

1. Système (100) pour fournir à un dispositif (120) un accès à des données de capteur d'un capteur (104), le système (100) comprenant :
- le capteur (104) couvrant un volume de détection (112), le volume de détection (112) ayant une forme particulière, et
- une ou plusieurs sources de lumière (106) pour émettre de la lumière ayant une distribution de lumière (114) ressemblant à la forme du volume de détection (112), les une ou plusieurs sources de lumière (106) étant agencées par rapport au capteur (104) de telle sorte que le volume de détection (112) chevauche sensiblement la distribution de lumière (114), et
- un dispositif d'entraînement (108) pour entraîner les une ou plusieurs sources de lumière (106) à incorporer un code (116) dans la lumière,
**caractérisé en ce que**
le code (116) comprend les données de capteur du capteur (104), ou
**en ce que**
le code (116) comprend une clé pour fournir un accès aux données de capteur du capteur (104).

2. Système (100) selon la revendication 1, dans lequel le système (100) comprend un émetteur-récepteur pour recevoir des données à partir du dispositif (120) indiquant que le dispositif (120) est situé dans le volume de détection (112) et pour fournir des données de capteur au dispositif (120) si le dispositif (120) est situé dans le volume de détection (112) du capteur (104).

3. Système (100) selon l'une quelconque des revendications précédentes, dans lequel les une ou plusieurs sources de lumière (106) sont agencées par rapport au capteur (104) de telle sorte qu'au moins 90 % de la distribution de lumière (114) sont situés dans les limites du volume de détection (112).

4. Système (100) selon la revendication 3, dans lequel les une ou plusieurs sources de lumière (106) sont agencées par rapport au capteur (104) de telle sorte que la distribution de lumière (114) est située dans les limites du volume de détection (112).

5. Système (100) selon l'une quelconque des revendications précédentes, dans lequel le système (100) comprend en outre le dispositif (120), le dispositif (120) comprenant :
- un détecteur de lumière (122) agencé pour détecter le code (116) incorporé dans la lumière,
- un processeur agencé pour déterminer que le dispositif (120) est situé dans le volume de détection (112) du capteur (104) si le code (116) a été détecté.

6. Système (100) selon la revendication 5, dans lequel le dispositif (120) comprend une unité de communication agencée pour communiquer avec le capteur (104), et dans lequel le processeur est agencé pour établir une connexion avec le capteur (104) s'il a été déterminé que le dispositif (120) est situé dans le volume de détection (112) du capteur (104).

7. Système (100) selon la revendication 5 ou 6, dans lequel le code (116) comprend un identifiant du capteur (104), et dans lequel le processeur du dispositif (120) est agencé pour identifier le capteur (104) sur la base de l'identifiant.

8. Système (100) selon l'une quelconque des revendications 5 à 7, dans lequel le dispositif (120) comprend en outre une interface utilisateur, et dans lequel le processeur est en outre agencé pour fournir, via l'interface utilisateur, un indicateur que le dispositif (120) est situé dans le volume de détection (112).

9. Système (100) selon l'une quelconque des revendications précédentes, dans lequel le capteur (104) est un capteur de vision, et dans lequel le volume de détection (112) est défini par un champ de vision du capteur de vision.

10. Procédé pour fournir à un dispositif (120) un accès à des données de capteur d'un capteur (104), le procédé comprenant les étapes consistant à :
- fournir le capteur (104) couvrant un volume de détection (112), le volume de détection (112) ayant une forme particulière,
- émettre, via une ou plusieurs sources de lumière (106), de la lumière ayant une distribution de lumière (114) ressemblant à la forme du volume de détection (112), de telle sorte que le volume de détection (112) chevauche sensiblement la distribution de lumière (114), et
- entraîner les unes ou plusieurs sources de lumière (106) pour incorporer un code (116) dans la lumière,
**caractérisé en ce que**
le code (116) comprend les données de capteur du capteur (104), ou
**en ce que**
le code (116) comprend une clé pour fournir un accès aux données de capteur du capteur (104).

11. Procédé selon la revendication 10, comprenant en outre les étapes consistant à :
- détecter, via le dispositif (120), le code (116) incorporé dans la lumière,
- déterminer que le dispositif (120) est situé dans le volume de détection (112) du capteur (104) si le code (116) a été détecté, et
- fournir, via une interface utilisateur, un indicateur que le dispositif (120) est situé dans le volume de détection (112).
